# FASCICULE DE BREVET EUROPEEN

(11) **EP 0 486 340 B1**
(45) Date de publication et mention de la délivrance du brevet: **06.10.1993**
(21) Numéro de dépôt: 91402803.0
(22) Date de dépôt: 22.10.1991
(51) Int. Cl.: B60T 7/12, B60T 8/48, B60T 7/04, B60T 13/52

(54) **Servofrein pneumatique**
Pneumatischer Bremskraftverstärker
Pneumatic brake booster

(30) Priorité: 13.11.1990 FR 9014064
(43) Date de publication de la demande: 20.05.1992
(73) Titulaire: ALLIEDSIGNAL EUROPE SERVICES TECHNIQUES, 93700 Drancy (FR)
(72) Inventeur: Castel, Philippe, Bendix Europe Services Tech., F-93700 Drancy (FR); Le Normand, Pascal, Bendix Europe Services Tech., F-93700 Drancy (FR)
(74) Mandataire: Bentz, Jean-Paul

(56) Documents cités:
- EP-A- 0 303 470
- EP-A- 0 389 205
- WO-A-82/02176
- WO-A-86/04869
- WO-A-90/00127
- GB-A- 2 089 453

## Description

La présente invention concerne un servofrein pneumatique susceptible de fonctionner sans être actionné par une pédale, et comportant deux chambres séparées par un piston unique et une membrane déroulant unique, et au moins une partie fixe et une tige de commande avec laquelle coopère la pédale.

Un tel servofrein trouve une application préférée dans l'assistance au freinage des véhicules automobiles pourvu d'un dispositif permettant de ralentir une roue motrice tendant à patiner sur la surface de roulement ou d'un dispositif de freinage automatique en réponse à un signal émis par exemple par une balise ou un radar.

Un tel servomoteur est, par exemple, décrit dans EP-A-O 303 470, et son fonctionnement, bien connu de l'homme du métier, ne sera pas repris en détail ici.

Le servomoteur de ce document présente un grave inconvénient en ce que, lorsqu'il fonctionne en mode automatique, la pédale de frein est emmenée par la tige de commande comme si elle avait été actionnée par le conducteur. De ce fait, si le conducteur désire à ce moment-là appuyer lui-même sur cette pédale, il ne la trouve pas à sa place ordinaire, ce dont il peut résulter un moment de panique préjudiciable à une bonne conduite. En outre, en mode de fonctionnement automatique, la pédale étant enfoncée, il devient impossible de détecter le fait que le conducteur désire freiner lui-même, ce qui peut avoir de graves conséquences notamment, si le servofrein est utilisé avec un dispositif d'anti-patinage. La présente invention a pour but d'obvier à ces inconvénients.

Selon l'invention, un fourreau est en appui contre la pédale et entoure partiellement la tige de commande, la tige de commande comporte un épaulement formant butée coopérant avec le fourreau au repos et lorsque le servofrein est actionné par la pédale, et le fourreau est chargé par un ressort maintenant la pédale à une distance déterminée d'une partie fixe du servofrein tant que la pédale n'est pas actionnée.

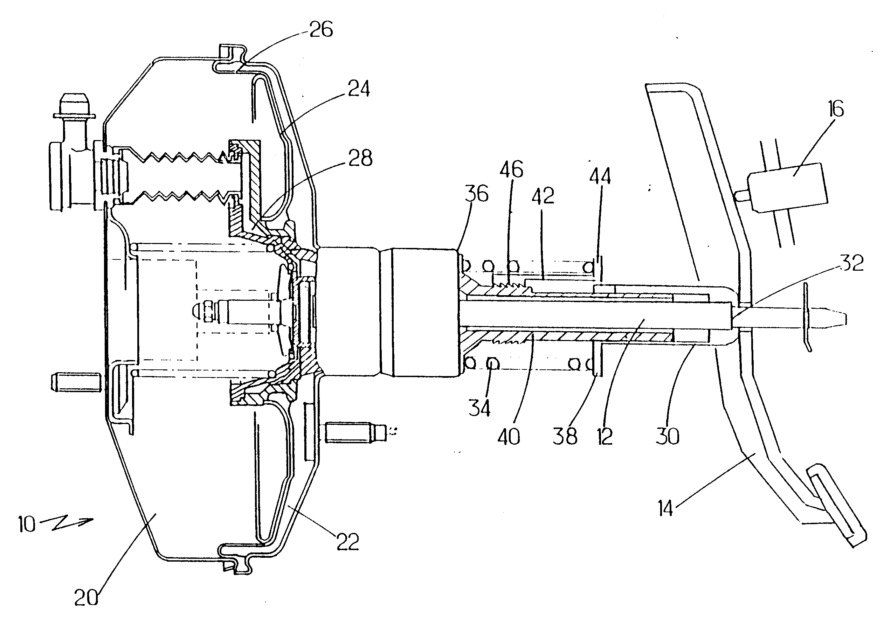

L'invention sera mieux comprise et d'autres buts, avantages et caractéristiques de celle-ci apparaîtront plus clairement à la lecture de la description qui suit d'un mode de réalisation donné à titre non limitatif et à laquelle est jointe une planche de dessin sur laquelle :
- La Figure Unique représente schématiquement et partiellement en coupe un servofrein conforme à la présente invention.

En référence maintenant à cette Figure, l'homme du métier reconnaîtra un servofrein pneumatique 10 pourvu de sa tige de commande 12, ainsi que la pédale d'actionnement 14 dont un déplacement est détecté par un contacteur 16 commandant l'allumage des feux arrières de stop.

Le servomoteur est d'un type classique comportant deux chambres 20, 22 séparées par un piston 24 et une membrane déroulante 26. Un conduit 28 permet d'alimenter directement la chambre 22 en air sous pression atmosphérique de manière à faire fonctionner le servofrein sans actionner la pédale 14 en commandant une simple électrovalve (non représentée).

Une différence entre les pressions régnant dans les deux chambres entraîne un déplacement du piston 24 et de la tige de commande 12. Un fourreau 30 est disposé en appui contre la pédale 14 sur la tige de commande 12. L'extrémité de ce fourreau 30 comporte un orifice traversé par la tige de commande 12. Cette dernière est pourvue d'un épaulement 32 formant butée pour coopérer avec l'extrémité du fourreau 30.

Ainsi en fonctionnement du servofrein par la pédale, celle-ci appuie sur le fourreau 30, lequel s'appuie sur l'épaulement 32 de la tige 12 qui s'enfonce donc comme la pédale 14.

Le fourreau 30 est chargé par un ressort hélicoïdal 34 en appui sur une partie fixe du servofrein. Sur l'exemple représenté, cette partie fixe est constituée par le boîtier 36 du servofrein 10, mais elle pourrait également être constituée par le capôt d'un système de réduction de course morte.

Le ressort 34 présente favorablement une très légère précontrainte juste destinée à vaincre les forces générées par la pesanteur sur la pédale 14 et par le ressort du contacteur 16 sur la pédale 14.

Pour éviter que ce ressort 34 détermine une course morte supplémentaire pour la pédale 14, il est nécessaire qu'au repos, la pédale 14, le fourreau 30 et l'épaulement 32 de la tige de commande 12 soient respectivement en contact. Dans ce but, le ressort 34 est du type à extension limitée par une entretoise de longueur déterminée, réglable dans l'exemple représenté.

Cette entretoise est constituée d'un cylindre fixe 40 solidaire du boîtier 36 du servofrein 10, et d'une fourche 42 emmanchée sur le cylindre 40. Le ressort est alors rendu, au repos, prisonnier entre les dents 44 de la fourche 42 et le boîtier 36. Ainsi, le ressort 34 n'a plus d'action sur le fourreau 30 au repos.

Un moyen de verrouillage est prévu pour immobiliser la fourche 42 par rapport au cylindre 40. Ce moyen de verrouillage est favorablement constitué par deux jeux de dents 46 respectivement solidaires de la fourche 42 et du cylindre 40 et coopérant ensemble. Il pourrait également être constitué par un unique jeu de dents solidaire soit de la fourche 42 soit du cylindre 40 et mordant l'autre.

Le fourreau 30 comporte des doigts centrifuges 38 sur lesquels s'appuie le ressort 34 et faisant saillie entre les dents 44 de la fourche 42.

Ainsi, en mode de fonctionnement automatique, la tige de commande 12 s'enfonce dans le servofrein 10, mais la pédale 14 reste immobile sous l'action du fourreau 30 et du ressort 34. De ce fait, le contacteur 16 ne détecte pas de mouvement de la pédale 14. Par contre, si, pendant que le servofrein fonctionne en mode automatique, le conducteur désire freiner, le mouvement de la pédale sera aussitôt détecté par le contacteur 16, ce qui aura pour effet, par exemple, de mettre hors service la commande du mode automatique.

On comprendra que de nombreuses modifications pourront être apportées à l'invention sans sortir du cadre défini par les revendications ci-jointes.

## Revendications

1. Servofrein pneumatique (10) susceptible de fonctionner sans être actionné par une pédale (14), le dit servofrein comportant deux chambres (20,22) séparées par un piston unique (24) et une membrane déroulante unique (26), et au moins une partie fixe (36) et une tige de commande (12) avec laquelle coopère la dite pédale (14), caractérisé en ce qu'un fourreau (30) est en appui contre la dite pédale (14) et entoure partiellement la dite tige de commande (12), que la dite tige de commande (12) comporte un épaulement (32) formant butée coopérant avec le dit fourreau (30) au repos et lorsque ledit servofrein est actionné par la dite pédale (14), et que le dit fourreau (30) est chargé par un ressort (34) maintenant la dite pédale (14) à une distance déterminée de la dite partie fixe (36) du servofrein (10) tant que la dite pédale (14) n'est pas actionnée.

2. Servofrein selon la revendication 1, caractérisé en ce que le dit ressort (34) est un ressort hélicoïdal à extension limitée par une entretoise (40, 42) de longueur déterminée.

3. Servofrein selon la revendication 2, caractérisé en ce que la dite longueur déterminée détermine la dite distance déterminée.

4. Servofrein selon la revendication 3, caractérisé en ce que la dite longueur déterminée de la dite entretoise est réglable.

5. Servofrein selon la revendication 4, caractérisé en ce que la dite entretoise est constituée d'un cylindre (40) solidaire de la dite partie fixe (36) et entourant la dite tige (12) et sur lequel est emmanchée une fourche (42), un moyen de verrouillage (46) de la dite fourche (42) sur le dit cylindre (40) étant prévu.

6. Servofrein selon la revendication 5, caractérisé en ce que le dit moyen de verrouillage (46) est constitué par un jeu de dents solidaire de l'un des cylindre (40) et fourche (42) et mordant l'autre.

7. Servofrein selon la revendication 5, caractérisé en ce que le dit moyen de verrouillage (46) est constitué par deux jeux de dents respectivement solidaires de la fourche (42) et du cylindre (40) et coopérant ensembles.

8. Servofrein selon l'une quelconque des revendications 5 à 7, caractérisé en ce que le dit fourreau (30) comporte des doigts centrifuges (38) coopérant avec le dit ressort (34) et faisant saillie entre les dents (44) de la dite fourche (42).

## Patentansprüche

1. Pneumatischer Bremskraftverstärker (10), der ohne eine Betätigung durch ein Pedal (14) arbeiten kann, wobei der Bremskraftverstärker enthält: zwei durch einen einzigen Kolben (24) und eine einzige Abrollmembran (26) getrennte Kammern (20, 22), wenigstens einen feststehenden Abschnitt (36). und eine mit dem Pedal (14) zusammenwirkende Steuerstange (12), dadurch gekennzeichnet, daß eine Buchse (30) sich gegen das Pedal (14) abstützt und teilweise die Steuerstange (12) umschließt, daß die Steuerstange (12) eine Schulter (32) enthält, die in der Ruhestellung, und wenn der Bremskraftverstärker durch das Pedal betätigt wird, mit der Buchse (30) als Anschlag zusammenwirkrt, und daß die Buchse (30) von einer Feder (34) beaufschlagt wird, die das Pedal (14) in einem bestimmten Abstand von dem feststehenden Abschnitt (36) des Bremskraftverstärkers (10) hält, wenn das Pedal (14) nicht betätigt wird.

2. Bremskraftverstärker nach Anspruch 1, dadurch gekennzeichnet, daß die Feder (34) eine Schraubenfeder ist, deren Längung durch ein Distanzstück (40, 42) mit bestimmter Länge beschränkt ist.

3. Bremskraftverstärker nach Anspruch 2, dadurch gekennzeichnet, daß die be- stimmte Länge den bestimmten Abstand bestimmt.

4. Bremskraftverstärker nach Anspruch 3, dadurch gekennzeichnet, daß die bestimmte Länge des Distanzstücks einstellbar ist.

5. Bremskraftverstärker nach Anspruch 4, dadurch gekennzeichnet, daß das Distanzstück durch einen Zylinder (40) gebildet ist, der an dem feststehenden Abschnitt (36) befestigt ist, die Stange (12) umschließt, und an dem eine Gabel (42) angesetzt ist, und daß auf dem Zylinder (40) ein Mittel (46) zur Verriegelung der Gabel vorgesehen ist.

6. Bremskraftverstärker nach Anspruch 5, dadurch gekennzeichnet, daß das Verriegelungsmittel (46) durch einen Satz Zähne gebildet ist, der entweder am Zylinder (40) oder an der Gabel (42) angebracht ist und am jeweils anderen Element angreift.

7. Bremskraftverstärker nach Anspruch 5, dadurch gekennzeichnet, daß das Verriegelungsmittel (46) durch zwei Sätze Zähne gebildet ist, die an der Gabel (42) bzw. am Zylinder (40) angebracht sind und ineinander eingreifen.

8. Bremskraftverstärker nach einem der Ansprüche 5 bis 7, dadurch gekennzeichnet, daß die Buchse (30) nach außen gerichtete Finger (38) enthält, die zwischen den Zinken (44) der Gabel (42) mit der Feder (34) zusammenwirken.

## Claims

1. Pneumatic servo brake (10) capable of operating without being actuated by a pedal (14) said servo brake possessing two chambers (20, 22) separated by a single piston (24) and a single rolling diaphragm (26), and at least one fixed part (36) and a control rod (12) with which said pedal (14) cooperates, characterized in that a sleeve (30) bears against said pedal (14) and partially surrounds said control rod (12), in that said control rod (12) possesses a shoulder (32) forming a stop cooperating with said sleeve (30) at rest and when the servo brake is actuated by said pedal (14), and in that said sleeve (30) is loaded by a spring (34) maintaining said pedal (14) at a given distance from said fixed part (36) of the servo brake (10) when said pedal (14) is not actuated.

2. Servo brake according to Claim 1, characterized in that said spring (34) is a helical spring having an extension limited by a strut (40, 42) of a given length.

3. Servo brake according to Claim 2, characterized in that said given length determines said given distance.

4. Servo brake according to Claim 3, characterized in that said given length of said strut is adjustable.

5. Servo brake according to Claim 4, characterized in that said strut is constituted by a cylinder (40) solidly attached to said fixed part (36) and surrounding said rod (12) and onto which a fork (42) is fitted, a means (46) for locking said fork (42) on said cylinder (40) being provided.

6. Servo brake according to Claim 5, characterized in that said locking means (46) is constituted by a set of teeth solidly attached to one of the cylinder (40) and the fork (42) and engaging the other.

7. Servo brake according to Claim 5, characterized in that said locking means (46) is constituted by two sets of teeth solidly attached to the fork (42) and to the cylinder (40) respectively and working together.

8. Servo brake according to working together any of Claims 5 to 7, characterized in that said sleeve (30) possesses centrifugal fingers (38) cooperating with said spring (34) and protruding between the teeth (44) of said fork (42).
